# EUROPÄISCHE PATENTSCHRIFT

(11) **EP 0 825 072 B1**
(45) Veröffentlichungstag und Bekanntmachung des Hinweises auf die Patenterteilung: **14.11.2001**
(21) Anmeldenummer: 97114295.5
(22) Anmeldetag: 19.08.1997
(51) Int. Cl.: B60R 21/16

(54) **Verfahren und Vorrichtung zum Unterbringen eines zu einem Paket gefalteten Luftsacks in einem Airbagvorrichtungsbehälter**
Method and device to recess an airbag folded as a package in an airbag device housing
Méthode et dispositif de placement d'un coussin gonflable plié en paquet dans un logement du dispositif de coussin

(30) Priorität: 19.08.1996 DE 19633387
(43) Veröffentlichungstag der Anmeldung: 25.02.1998
(73) Patentinhaber: TAKATA (EUROPE) VEHICLE SAFETY TECHNOLOGY GmbH, D-89081 Ulm (DE)
(72) Erfinder: Heudorfer, Benedikt, 89278 Nersingen (DE); Müller, Frank, 89134 Blaustein (DE); Ritter, Martin, 89233 Neu-Ulm (DE)
(74) Vertreter: Baumgärtel, Gunnar, Dr.

(56) Entgegenhaltungen:
- WO-A-97/28024
- DE-A- 2 043 255
- DE-C- 4 422 276
- FR-A- 2 154 234

## Beschreibung

Die Erfindung betrifft ein Verfahren und eine Vorrichtung zum Unterbringen eines Luftsackes einer Airbagvorrichtung bei Kraftfahrzeugen in einem aufbrechbaren Behälter nach dem Oberbegriff des Anspruches 1 bzw. 10 sowie eine Airbagvorrichtung mit einem zu einem Paket gefalteten und in einem Behälter angeordneten Luftsack nach dem Oberbegriff des Patentanspruchs 14.

Bei Luftsäcken von Airbagvorrichtungen kommt es darauf an, diese zum Zweck einer platzsparenden Unterbringung zu einem möglichst kompakten Paket zusammenzufalten, wobei jedoch darauf zu achten ist, daß die Faltung so erfolgt, daß bei einer unfallbedingten Zündung des Gasgenerators ein schnelles und problemloses Aufblähen des Luftsackes zum Schutz der Insassen gewährleistet bleibt.

Aus der DE 44 22 276 C2 ist ein Verfahren zum Falten und Verpacken von Luftsäcken in einen aufbrechbaren Behälter sowie eine Vorrichtung bekannt, mit der das Verfahren durchgeführt werden kann. Bei diesem bekannten Verfahren wird der Luftsack derart gefaltet, daß konzentrisch um das Zentrum des Luftsacks verlaufende, kreisförmige Falten entstehen. Der so gefaltete Luftsack wird anschließend in den Behälter geschoben und in diesem verpackt.

Die Aufgabe der Erfindung besteht darin, ein Verfahren, eine Vorrichtung und eine Airbagvorrichtung der eingangs genannten Gattung zu schaffen, mit denen der zunächst beispielsweise als flache Scheibe ausgebildete Luftsack auf einfache und wirtschaftliche Weise zu einem kompakten Paket faltbar ist, wobei das gefaltete Paket so ausgebildet sein soll, daß eine möglichst gleichmäßige und weitgehend ruckfreie Aufblähung des Luftsackes möglich ist. Bevorzugt sollen die im entfalteten Zustand axial am weitesten vom Gasgenerator entfernten Bereiche des Luftsackes schon beim Beginn des Aufblähvorganges bevorzugt vom expandierenden Gas beaufschlagt werden.

Zur Lösung dieser Aufgabe sind die Merkmale des kennzeichnenden Teils der Patentansprüche 1 bzw. 10 bzw. 14 vorgesehen.

Der Erfindungsgedanke ist also darin zu sehen, daß der Faltungsvorgang eine Relativrotation unterschiedlicher Bereiche des Luftsackes um die Achse der vorzugsweise zentralen Öffnung herum umfaßt, wodurch sich schraubenlinien- bzw. spiralförmige Falten bilden und gewährleistet ist, daß die dem Gasgenerator axial gegenüberliegenden Bereiche des Luftsackes von Beginn der Zündung an bevorzugt vom expandierenden Gas beaufschlagt werden.

Vorteilhafte Weiterbildungen des erfindungsgemäßen Verfahrens sind durch die Ansprüche 2 bis 9 gekennzeichnet. Vorteilhafte Weiterbildungen der erfindungsgemäßen Vorrichtung entnimmt man den Ansprüchen 11 bis 13. Bevorzugte Weiterbildungen der erfindungsgemäßen Airbagvorrichtungen sind durch die Patentansprüche 15 und 16 gekennzeichnet.

Das Vorsehen gegenläufig verdrehter Bereiche des gefalteten bzw. zu einem Paket kompaktierten Luftsackes hat den Sinn, daß die beim Aufblähen des Luftsackes auftretenden Rotationsbewegungen des Blattmaterials gegenläufig sind, so daß kein resultierender Drehimpuls entsteht.

Die Erfindung wird im folgenden beispielsweise anhand der Zeichnung beschrieben; in dieser zeigen
- die Figuren 1a bis 1i: schematische und teilweise geschnittene Seitenansichten eines Luftsackes einer erfindungsgemäßen Airbagvorrichtung sowie der zu seiner Herstellung verwendeten Vorrichtungselemente in den verschiedenen Phasen des erfindungsgemäßen Verfahrens,
- die Figuren 2a bis 2e: Draufsichten der Gegenstände der Figuren 1a bis 1e,
- die Figuren 3a bis 3i: schematische und teilweise geschnittene Seitenansichten einer weiteren Ausführungsform eines erfindungsgemäßen Luftsackes und der zu seiner Herstellung verwendeten Vorrichtung in den verschiedenen Phasen des erfindungsgemäßen Herstellungsverfahrens,
- die Figuren 4a bis 4f: Draufsichten der Gegenstände der Figuren 3a bis 3f,
- die Figuren 5a bis 5f: Seitenansichten einer weiteren Ausführungsform eines erfindungsgemäßen Luftsackes mit der für seine Herstellung verwendeten Vorrichtung in den verschiedenen Schritten des erfindungsgemäßen Verfahrens und
- die Figuren 6a bis 6f: Draufsichten der Gegenstände der Figuren 5a bis 5f.

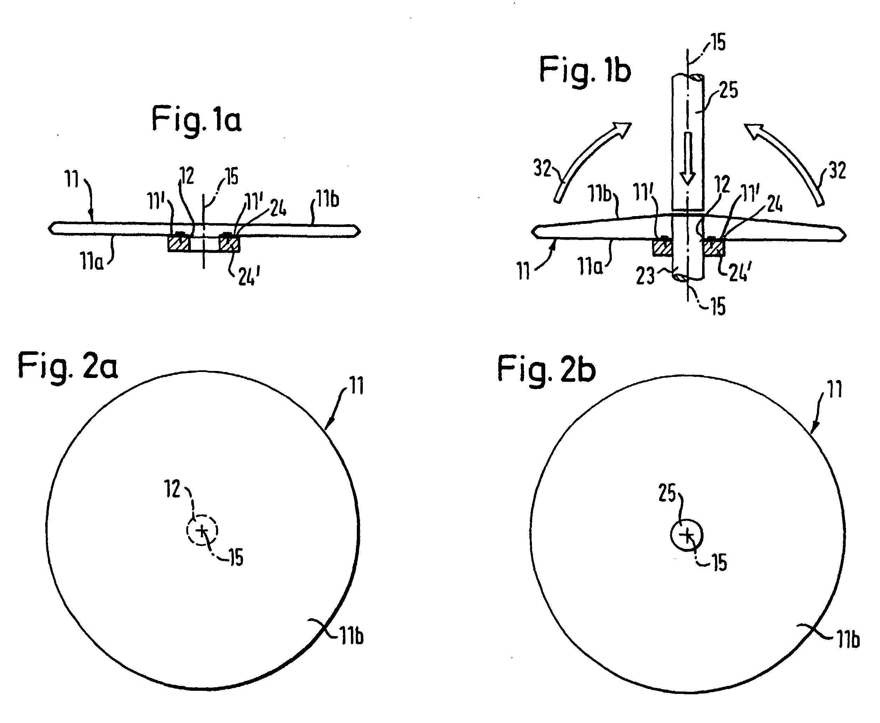

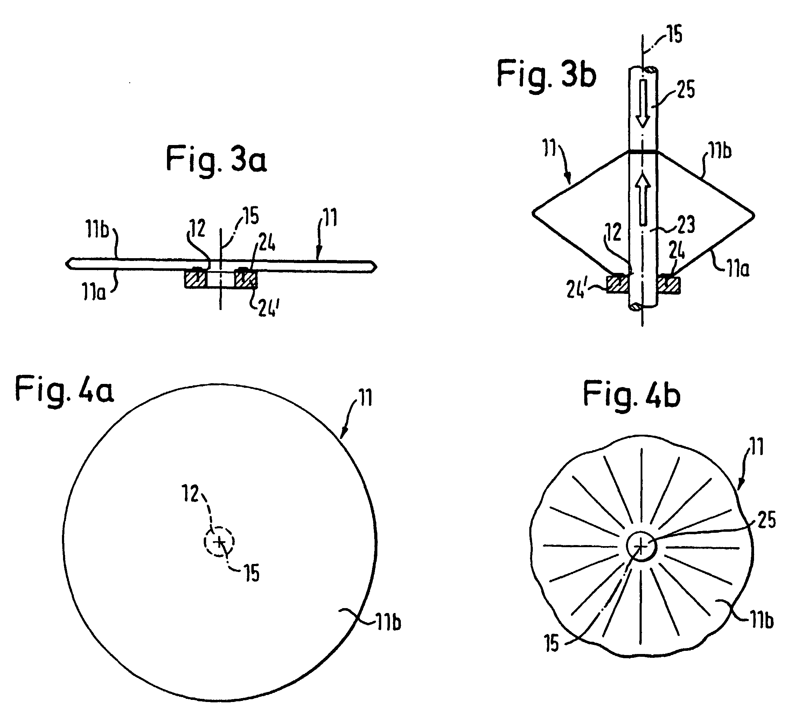

Nach den Figuren 1a und 2a besteht ein erfindungsgemäßer Luftsack 11 aus zwei kreisscheibenförmigen flexiblen Blättern 11a, 11b, die z.B. durch ein geeignetes Gewebe gebildet und an ihrem Umfang z.B. durch Vernähen miteinander verbunden sind. Das untere Blatt 11a weist eine zentrale kreisförmige Öffnung 12 auf, um die herum eine Luftsackhaltescheibe 24 vorgesehen und mit dem dort befindlichen Blattmaterial 11' fest verbunden ist. Die Luftsackhaltescheibe 24 dient zum einen der Festlegung des Luftsacks zusammen mit einer Klemmvorrichtung 24' für die im folgenden beschriebene Montage und kann außerdem als Verbindungsglied zum nicht dargestellten Gasgenerator verwendet werden.

Nach Figur 1b wird in die von der Luftsackkhaltescheibe 24 umgebene zentrale Öffnung 12 des unteren Blattes 11a ein Stempel 23 mit vorzugsweise kreisförmigem Querschnitt eingeschoben, welcher die Klemmvorrichtung 24' ebenfalls in einer zentralen Öffnung durchgreift und gegen eine Relativverdrehung festlegt und welcher von unten zentral gegen das obere Blatt 11b stößt und auf diese Weise den Gassack 11 in Richtung der zentralen Achse 15 der Öffnung 12 etwas auseinanderzieht.

Von der entgegengesetzten oberen Seite ist ein entsprechend wie der erste Stempel 23 dimensionierter zweiter Stempel 25 mit seiner unteren Stirnseite gegenüber der oberen Stirnseite des ersten Stempels 23 angeordnet, wodurch bei weiterer Senkung des zweiten Stempels 25 der zentrale Bereich des oberen Blattes 11b zwischen den beiden Stirnseiten der Stempel 23, 25 eingeklemmt wird.

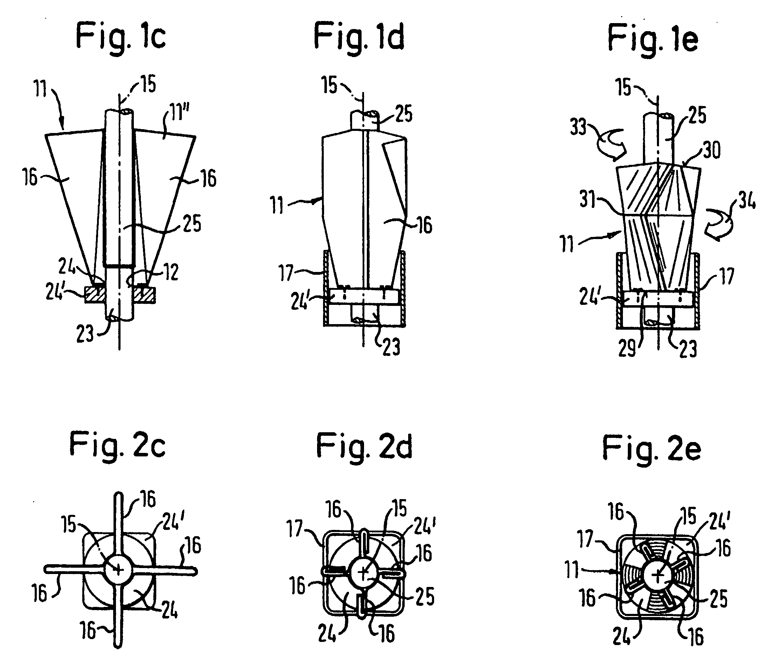

Nunmehr greifen an den radial außerhalb der Luftsackkhaltescheibe 24 befindlichen Bereichen des Luftsackes 11 durch Pfeile veranschaulichte Mittel 32 an und falten diese Bereiche in der aus den Figuren 1b und 1c und 2c ersichtlichen Weise nach oben, so daß sie im wesentlichen parallel zur Achse 15 verlaufen. Die Mittel 32 gewährleisten dabei nicht nur ein Hochklappen, sondern auch ein Falten der hochgeklappten Bereiche derart, daß beispielsweise vier oder mehr unter einem entsprechenden gleichen Winkel zueinander angeordnete Radialfalten 16 entstehen.

Anschließend werden dann gemäß den Figuren 1d und 2d die Falten 16 jeweils noch einmal nach innen um 180° gefaltet, wodurch die radiale Erstreckung der Falten in etwa halbiert wird.

Gleichzeitig oder danach wird von unten eine Hohlform 17 über die Klemmvorrichtung 24' geschoben, wobei aus der Zeichnung ersichtlich ist, daß die Hohlform 17 einen quadratischen Querschnitt aufweist, der dem Außenumfang der Klemmvorrichtung 24' umschrieben ist. Die Luftsackhaltescheibe 24 kann dagegen kreisförmig sein.

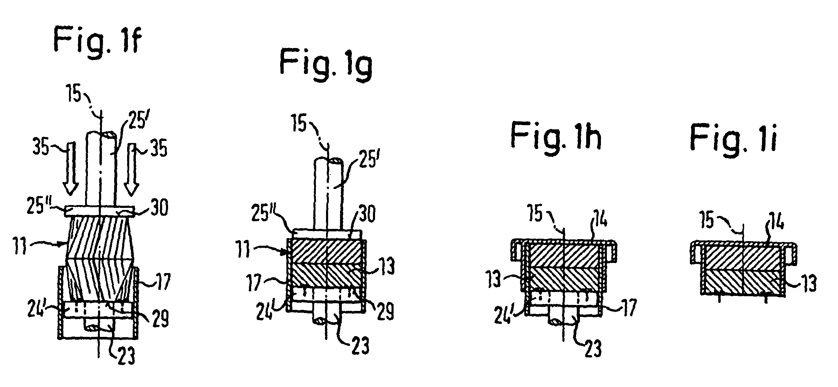

Die Hohlform 17 erstreckt sich bis zu einer solchen Höhe oberhalb der Klemmvorrichtung 24', daß innerhalb des oberen Teils der Hohlform 17 ein Raum gebildet wird, in dem das gemäß den Figuren 1g bis 1i gebildete Luftsackpaket 13 Platz hat.

Nach Figur 1e greifen nunmehr Verdrehungsmittel 33, 34 an der oberen Stirnseite 30 des gefalteten Luftsackes 11 und in dessen mittleren Bereich 31 in entgegengesetztem Sinne an, was durch die Pfeile in Figur 1e angedeutet ist. Die untere Stirnseite 29 wird dabei durch den Stempel 23 über die mit der Luftsackhaltescheibe 24 verbundene Klemmvorrichtung 24' gegen Drehung festgehalten. Gleichzeitig greift gemäß Figur 1f ein entweder am Stempel 25 oder einem weiteren Stempel 25' vorgesehener Flansch 25'' von oben an der Stirnseite 30 des gefalteten Luftsackes 11 an.

Zusammen oder zeitlich versetzt mit der Drehbewegung der Mittel 33, 34 wird der Stempel 25' mit dem Flansch 25'' in Richtung der Pfeile 35 in Figur 1f nach unten geschoben, wobei der gefaltete Luftsack 11 gegenläufig verdreht und zusammengedrückt wird. Aufgrund geeigneter Dimensionierung der Hohlform 17 wird dabei schließlich der Luftsack als in sich mehrfach gefaltetes und um die Achse 15 relativ verdrehtes Gebilde kompakt untergebracht.

Schließlich wird der Stempel 25' mit dem Flansch 25'' entfernt, und es wird von oben ein aufbrechbarer Behälter bzw. Kappe 14 auf die Hohlform 17 aufgesetzt, welche nach Figur 1i nach unten abgezogen wird. Nach Entfernen der Klemmvorrichtung 24' und Verbindung der Luftsackhaltescheibe 24 mit dem unteren Rand der Kappe 14 ist das Luftsackpaket 13 einbaufertig.

Eine wesentliche Funktion des ersten Stempels 23, der bis zur Fertigstellung des Paketes 13 seine Anfangsposition beibehält, ist die, daß im Innern des Paketes 13 ein durchgehender Hohlraum verbleibt, der bis zu dem der Öffnung 12 axial gegenüberliegenden Bereich des Gewebeblattes 11b reicht, so daß beim Anschluß eines Gasgenerators und Zündung desselben die Druckgase unverzüglich bis zu dem betreffenden oberen Zentralbereich des Gassackes 11 gelangen können und im übrigen die seitlichen gefalteten Bereiche des Luftsackes 11 in optimaler Weise erreichen.

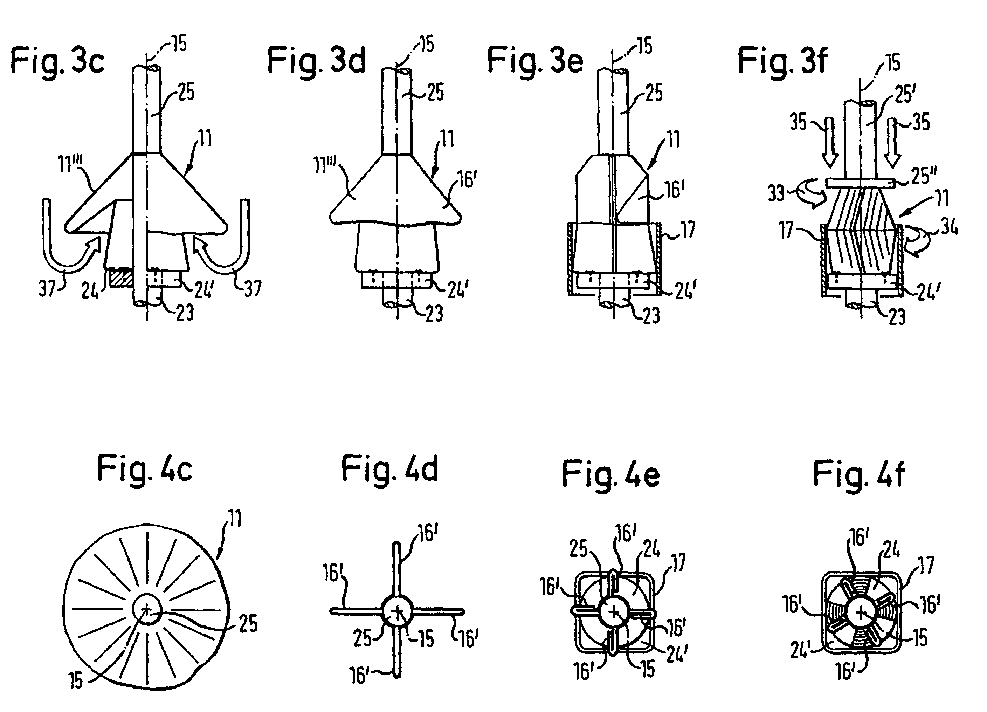

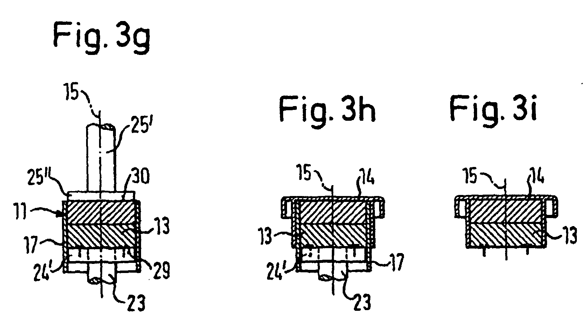

Die Ausführungsform nach den Figuren 3a bis 3i und 4a bis 4f unterscheidet sich von der nach 'den Figuren 1 und 2 zunächst dadurch, daß der untere erste Stempel 23 in der ersten Phase des Verfahrens gemäß den Figuren 3b und 4b wesentlich weiter nach oben durch die Ringscheibenanordnung 24 hindurchgeschoben wird, so daß zunächst ein aus den Gewebeblättern 11a und 11b bestehendes doppelkonisches Gebilde gemäß Figur 3b erhalten wird.

Dieses Gebilde wird gemäß den Figuren 3c und 4c durch mittels Pfeile 37 veranschaulichte Mittel zu einem Schirm 11''' gefaltet, welcher gleichzeitig oder anschließend gemäß den Figuren 3d und 4d auch radialförmig gefaltet wird, so daß schirmartig einander überlappende Radialfalten 16' gebildet werden, die gemäß den Figuren 3e und 4e wieder aufeinandergefaltet werden können.

Im übrigen entspricht die Verfahrensweise der anhand der Figuren 1 und 2 beschriebenen.

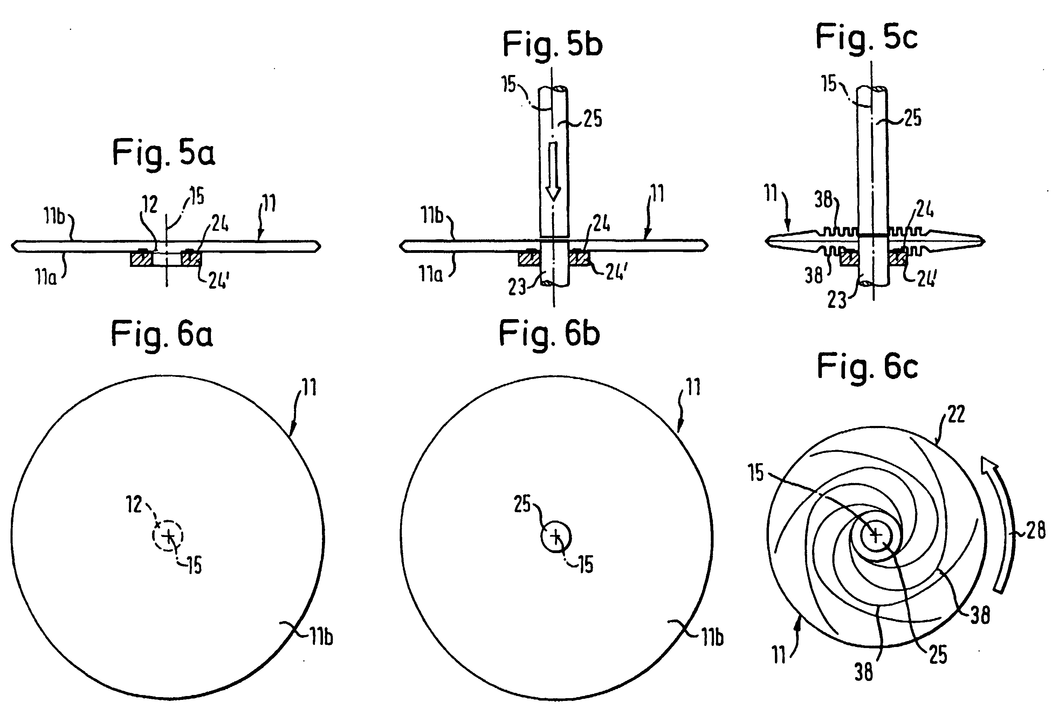

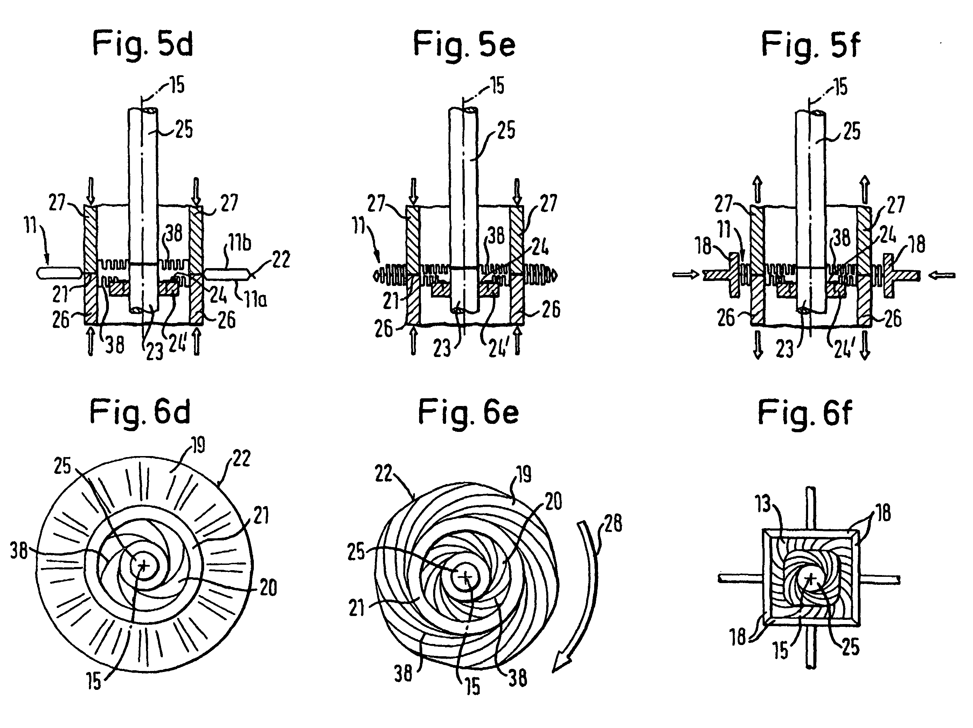

Bei der Ausführungsform nach den Figuren 5 und 6 erfolgt die durch Rotation hervorgerufene Faltung des flachen Luftsackes 11 (Figuren 5a, 5b bzw. 6a, 6b) dadurch, daß der untere Stempel 23 zunächst nur so weit in die Luftsackhaltescheibe 24 eingefahren wird, daß das obere Blatt 11b zwar berührt, jedoch der Luftsack 11 nicht insgesamt axial ausgezogen wird. Von oben drückt wieder der Außenstempel 25 gegen die obere Stirnseite des ersten Stempels 23, so daß das Blatt 11b im zentralen Bereich zwischen den beiden Stempeln 23, 25 eingeklemmt wird.

Nunmehr greifen im Bereich des Außenumfanges 22 des flachen Luftsackes 11 Drehmittel 28 an, während die Stempel 23, 25 und die Luftsackhaltescheibe 24 gegen Drehung gesichert werden. Durch Verdrehen der Drehmittel 28 in Richtung des Pfeiles in Figur 6c entstehen spiralförmige Falten 38, und der Durchmesser des Luftsackes wird hierbei stetig verkleinert. Gleichzeitig nimmt durch die Bildung der Spiralfalten 38 die axiale Dicke des Luftsackes 11 gemäß Figur 5c geringfügig zu.

Obwohl bereits durch die einseitige Verdrehung des flachen Luftsackes 11 eine kompakte gefaltete Anordnung erzielt werden kann, ist es nach den Figuren 5d und 6d bevorzugt, wenn in einem Zwischenbereich zwischen der Luftsackhaltescheibe 24 und dem Außenumfang 22 des Luftsackes 11 noch axial miteinander ausgerichtete Ringstempel 26, 27 von entgegengesetzten Seiten angreifen und die Ringstempel 26, 27 sowie die am Außenumfang 22 angreifenden Verdrehmittel 28 in entgegengesetzten Richtungen verdreht werden.

Auf diese Weise entstehen nach den Figuren 5e und 6e mit Spiralfalten 38 versehene Außen- bzw. Innenbereiche 19 bzw. 20 entgegengesetzter Drehrichtung.

Dazwischen befindet sich ein Umfangsbereich 21, an dem die Ringstempel 26, 27 von entgegengesetzten Axialseiten angreifen.

Um aus dem gemäß den Figuren 5e und 6e gegenläufig verdrehten flachen Spiralgebilde eine kompakte Paketanordnung 13 zu schaffen, können gemäß den Figuren 5f und 6f von vier oder mehr Seiten her Formplatten 18 angreifen und das zunächst kreisrunde Luftsackgebilde zu einem Paket 13 mit gewünschtem, grundsätzlich beliebigem Querschnitt zusammenpressen, welches dann in geeigneter Weise in eine Kappe (14 in Figur 1h, 1i) eingebracht werden kann.

Das Blatt 11b des Luftsackes 11 kann in nicht gezeigter Weise auch die üblichen Entlüftungsöffnungen aufweisen. Weiter können sich zwischen den Blättern 11a, 11b nicht gezeigte, an sich bekannte Fangbänder erstrecken.

### Bezugszahlenliste

- 11: Luftsack
- 11a: Blatt (Gewebe)
- 11b: Blatt (Gewebe)
- 11': Blattmaterial
- 11'': Bereich
- 13: Paket
- 14: Behälter (Kappe)
- 15: Achse
- 16: Radialfalten
- 16': Radialfalten
- 17: Hohlform
- 18: Formplatten
- 19: Außenbereich
- 20: Innenbereich
- 21: Umfangsbereich
- 22: Außenumfang
- 23: erster Stempel
- 24: Luftsackhaltescheibe
- 24': Klemmvorrichtung
- 25: zweiter Stempel
- 25': zweiter Stempel
- 25": Flansch
- 26: Ringstempel
- 27: Ringstempel
- 28: Verdehmittel
- 29: Stirnseite
- 30: Stirnseite
- 31: Bereich
- 32: Mittel
- 33: Verdrehungsmittel
- 34: Verdrehungsmittel
- 35: Pfeile
- 37: Mittel zur Schirmfaltung
- 38: Spiralfalten

## Patentansprüche

1. Verfahren zum Unterbringen eines Luftsackes (11) einer Airbagvorrichtung bei Kraftfahrzeugen in einem aufbrechbaren Behälter (14), bei welchem Verfahren der Luftsack (11), der aus zwei flach aufeinanderliegenden, an ihrem Umfang miteinander verbundenen, bevorzugt kreisförmigen flexiblen Blättern (11a, 11b) gebildet ist, von denen eines eine vorzugsweise zentrale Öffnung (12) für die Aufnahme eines Gasgenerators aufweist, zu einem kompakten Paket (13) gefaltet und in dieser Form in dem Behälter (14) angeordnet wird,
**dadurch gekennzeichnet,**
**daß** unterschiedlichen axial und/oder radial voneinander beabstandeten Bereichen des mehr oder weniger axial auseinandergezogenen Luftsackes (11) um die Achse (15) der Öffnung (12) herum eine Relativdrehung erteilt wird.

2. Verfahren nach Anspruch 1,
**dadurch gekennzeichnet,**
**daß** vor der Faltung das Material rund um die Öffnung (12) herum durch eine Luftsackhaltescheibe (24) verstärkt wird, welche vorzugsweise später auch als Verbindungsflansch zur Verbindung mit dem Gasgenerator verwendet wird.

3. Verfahren nach Anspruch 1 oder 2,
**dadurch gekennzeichnet,**
**daß** der flache Luftsack (11) vorzugsweise geringfügig axial auseinandergezogen und um das Blattmaterial (11') im Bereich der zentralen Öffnung (12) unter Bildung von mehreren, vorzugsweise zwei bis acht, insbesondere drei bis sechs und zweckmäßigerweise etwa vier Radialfalten (16), die vorzugsweise mehrfach, insbesondere zweifach in der einen und/oder anderen Richtung gefaltet sein können, in Richtung der Achse (15) der Öffnung (12) von der Öffnung (12) weggeklappt wird und daß der von der Öffnung (12) axial abgewandte Bereich (11'') relativ zum Blattmaterial (11') im Bereich der Öffnung (12) um die Achse (15) verdreht und auf das Blattmaterial (11') im Bereich der Öffnung (12) axial zubewegt wird, oder daß ein Bereich (31) zwischen den Stirnseiten (29, 30) des gefalteten Luftsackes (11) relativ zu den Stirnseiten (29, 30) um die Achse (15) verdreht und die Stirnseiten (29, 30) aufeinander zubewegt werden.

4. Verfahren nach Anspruch 1 oder 2,
**dadurch gekennzeichnet,**
**daß** der flache Luftsack (11) in Richtung der Achse (15) der zentralen Öffnung (12) so weit auseinandergezogen wird, daß eine Schirmfaltung möglich ist, daß eine vorzugsweise einfache oder mehrfache Schirmfaltung (11''') durchgeführt wird, daß anschließend mehrere, vorzugsweise zwei bis acht, insbesondere drei bis sechs und zweckmäßigerweise vier Radialfalten (16), die vorzugsweise mehrfach, insbesondere zweifach in der einen oder anderen Umfangsrichtung gefaltet sein können, gebildet werden und daß der von der Öffnung (12) axial abgewandte Bereich (11'') relativ zum Blattmaterial (11') im Bereich der zentralen Öffnung (12) um die Achse (15) verdreht und auf das Blattmaterial (11') im Bereich der Öffnung (12) axial zubewegt wird, oder daß ein Bereich (31) zwischen den Stirnseiten (29, 30) des gefalteten Luftsackes (11) relativ zu den Stirnseiten (29, 30) um die Achse (15) verdreht und die Stirnseiten (29, 30) aufeinander zubewegt werden.

5. Verfahren nach Anspruch 3 oder 4,
**dadurch gekennzeichnet,**
**daß** die Rotations- und Axialbewegungen im Sinne einer Schraubenbewegung gleichzeitig durchgeführt werden.

6. Verfahren nach einem der Ansprüche 2 bis 4,
**dadurch gekennzeichnet,**
**daß** um den gefalteten Luftsack (11) vor der Drehung und axialen Zusammendrückung eine dem Umfang des fertigen Paketes (13) entsprechende Hohlform (17) angeordnet wird, in die der gefaltete Luftsack (11) axial hineingedreht und -gedrückt wird.

7. Verfahren nach Anspruch 6,
**dadurch gekennzeichnet,**
**daß** nach dem Fertigstellen des Paketes (13) das einseitig offene Gehäuse (14) auf die Hohlform (17) aufgeschoben und letztere in entgegengesetzter Richtung axial abgezogen wird.

8. Verfahren nach Anspruch 1 oder 2,
**dadurch gekennzeichnet,**
**daß** der flache Luftsack (11) durch Erfassen an seinem Umfang und Verdrehen um die Achse (15) der vorzugsweise zentralen Öffnung (12) relativ zum Behältermaterial (11') im Bereich der Öffnung (12) unter Durchmesserverkleinerung verdreht und dadurch spiralig gefaltet wird und daß durch vom Umfang der Achse (15) nach innen verschiebbare Formplatten (18) dem Paket (13) die endgültige Form gegeben wird.

9. Verfahren nach Anspruch 8,
**dadurch gekennzeichnet,**
**daß** der flache Luftsack (11) zusätzlich in einem Umfangsbereich (21) mit kleinerem Radius als der Außenumfang (22) erfaßt und am Außenumfang (22) gegenläufig zum Blattmaterial (11') im Bereich der Öffnung (12) verdreht wird.

10. Vorrichtung zum Unterbringen eines Luftsackes (11) einer Airbagvorrichtung bei Kraftfahrzeugen in einem aufbrechbaren Behälter (14), bei welcher Vorrichtung der Luftsack (11), der aus zwei flach aufeinanderliegenden, an ihrem Umfang miteinander verbundenen, bevorzugt kreisförmigen flexiblen Blättern (11a, 11b) gebildet ist, von denen eines eine vorzugsweise zentrale Öffnung (12) für die Aufnahme eines Gasgenerators aufweist, zu einem kompakten Paket (13) gefaltet und in dieser Form in dem Behälter (14) angeordnet ist, insbesondere zur Ausführung des Verfahrens nach einem der Ansprüche 1 bis 9,
**dadurch gekennzeichnet,**
**daß** ein erster Stempel (23) vorgesehen ist, der in die vorzugsweise durch eine Luftsackhaltescheibe (24) verstärkte und bevorzugt zentrale Öffnung (12) axial eingreift und relativ zur Öffnung (12) axial so verschiebbar ist, daß durch Angreifen des Stempels (23) von innen am von der Öffnung (12) abgewandten Blatt (11b) der zunächst flache Luftsack (11) mehr oder weniger axial auseinandergezogen werden kann, daß mit der Luftsackhaltescheibe (24) eine Vorrichtung (24') drehfest verbunden ist, die auch gegenüber dem in die Luftsackhhaltescheibe (24) eingreifenden Stempel (23) drehfest festgelegt ist, und daß ein zum ersten Stempel (23) koaxialer zweiter Stempel (25) axial gegenüber dem ersten Stempel (23) außerhalb des Luftsackes (11) axial angeordnet ist, wobei die beiden Stempel (23, 25) das von der Öffnung (12) abgewandte Blatt (11b) des mehr oder weniger auseinandergezogenen Luftsackes (11) zwischen sich klemmen können, um die verschiedenen Faltungsvorgänge zu ermöglichen.

11. Vorrichtung nach Anspruch 10,
**dadurch gekennzeichnet,**
**daß** für das Zusammendrehen und -drücken des gefalteten Luftsackes (11) ein zweiter Stempel (25') mit einem Flansch (25'') vorgesehen ist, der die gesamte Stirnseite des gefalteten Luftsackes (11) von außen überdeckt.

12. Vorrichtung nach Anspruch 10 oder 11,
**dadurch gekennzeichnet,**
das Mittel (28) zum Erfassen des Luftsackes (11) am Außenumfang (22) vorgesehen sind.

13. Vorrichtung nach Anspruch 12,
**dadurch gekennzeichnet,**
**daß** zusätzlich zwei axial von entgegengesetzten Seiten an den Luftsack (11) andrückbare Ringstempel (26, 27) vorgesehen sind, deren Radius kleiner als der des Außenumfangs (22) des flachen Luftsackes (11) ist.

14. Airbagvorrichtung mit einem 'zu einem Paket (13) gefalteten und in einem Behälter (14) angeordneten Luftsack (11) insbesondere hergestellt mittels des Verfahrens nach einem der Patentansprüche 1 bis 9 und/oder mit einer Vorrichtung nach einem der Patentansprüche 10 bis 13,
**dadurch gekennzeichnet,**
**daß** axial und/oder radial beabstandete Bereiche des Paketes (13) relativ zueinander gleichsinnig oder gegensinnig verdreht sind.

15. Vorrichtung nach Anspruch 14,
**dadurch gekennzeichnet,**
**daß** die Stirnseiten (29, 30) des Paketes (13) um die Achse (15) der vorzugsweise zentralen Öffnung (12) gegeneinander verdreht sind.

16. Vorrichtung nach Anspruch 14 oder 15,
**dadurch gekennzeichnet,**
**daß** der Außenumfang (22) des Luftsackes (11) und das Blattmaterial (11') im Bereich der Öffnung (12) um die Achse (15) der Öffnung (12) gegeneinander verdreht sind.

## Claims

1. Method for accommodating an airbag (11) of an airbag in motor vehicles in a container (14) which can break open, in which method the airbag (11), which is formed from two preferably circular, flexible leaves (11a, 11b) which lie flat on each other, are connected to each other at their circumference and of which one has a preferably central opening (12) receiving a gas generator, is folded to form a compact package (13) and is arranged in this form in the container (14), **characterized in that** a relative rotation about the axis (15) of the opening (12) is imparted to different regions, which are spaced apart axially and/or radially from one another, of the airbag (11) which is extended axially to a greater or lesser extent.

2. Method according to Claim 1, **characterized in that** prior to the folding, the material around the opening (12) is reinforced by an airbag-retaining disc (24) which is preferably used later as a connecting flange for connection to the gas generator.

3. Method according to Claim 1 or 2, **characterized in that** the flat airbag (11) is preferably extended slightly axially and is folded away from the opening (12) in the direction of the axis of the opening (12) about the leaf material (11') in the region of the central opening (12), with formation of a plurality of radial folds (16), preferably 2 to 8, in particular 3 to 6, and expediently approximately 4 radial folds which can preferably be folded a number of times, in particular twice, in the one and/or other direction, and **in that** the region (11'') which faces away axially from the opening (12) rotates about the axis (15) relative to the leaf material (11') in the region of the opening (12) and is moved axially onto the leaf material (11') in the region of the opening (12), or **in that** a region (31) between the end sides (29, 30) of the folded airbag (11) rotates about the axis (15) relative to the end sides (29, 30) and the end sides (29, 30) are moved onto each other.

4. Method according to Claim 1 or 2, **characterized in that** the flat airbag (11) is extended in the direction of the axis (15) of the central opening (12) to an extent sufficient to make an umbrella-type folding possible, **in that** a preferably single or multiple umbrella-type folding (11''') is carried out, **in that** subsequently a plurality of radial folds (16), preferably 2 to 8, in particular 3 to 6, and expediently 4 radial folds are formed which can preferably be folded a number of times, in particular twice, in the one or other circumferential direction, and **in that** the region (11'') facing away axially from the opening (12) rotates about the axis (15) relative to the leaf material (11') in the region of the central opening (12) and is moved axially onto the leaf material (11') in the region of the opening (12), or **in that** a region (31) between end sides (29, 30) of the folded airbag (11) rotates about the axis (15) relative to the end sides (29, 30) and the end sides (29, 30) are moved onto each other.

5. Method according to Claim 3 or 4, **characterized in that** the rotational and axial movements are carried out simultaneously with the effect of a screwing movement.

6. Method according to one of Claims 2 to 4, **characterized in that** a hollow mould (17) which corresponds to the circumference of the finished package (13) is arranged around the folded airbag (11) prior to the rotation and axial compression, and the folded airbag (11) is rotated and pressed axially into the said hollow mould.

7. Method according to Claim 6, **characterized in that** after completion of the package (13) the housing (14), which is open on one side, is pushed onto the hollow mould (17) and the latter is drawn off axially in the opposite direction.

8. Method according to Claim 1 or 2, **characterized in that** the flat airbag (11) is rotated, by being grasped on its circumference and rotated about the axis (15) of the preferably central opening (12) relative to the container material (11') in the region of the opening (12), with the diameter of the airbag being reduced, and as a result is folded in a coiled manner, and **in that** the final shape is imparted to the package (13) by moulding plates (18) which can be displaced inwards from the circumference of the axis (15).

9. Method according to Claim 8, **characterized in that** the flat airbag (11) is additionally grasped in a circumferential region (21) having a smaller radius than the outside circumference (22) and on the outside circumference (22) is rotated in an opposed direction to the leaf material (11') in the region of the opening (12).

10. Device for accommodating an airbag (11) of an airbag in motor vehicles in a container (14) which can break open, in which device the airbag (11), which is formed from two preferably circular, flexible leaves (11a, 11b) which lie flat on each other, are connected to each other at their circumference and of which one has a preferably central opening (12) receiving a gas generator, is folded to form a compact package (13) and is arranged in this form in the container (14), in particular for implementing the method according to one of Claims 1 to 9, **characterized in that** a first ram (23) is provided which engages axially in the opening (12), which is preferably reinforced by an airbag-retaining disc (24) and is preferably central, and can be displaced axially relative to the opening (12) in such a manner that the initially flat airbag (11) can be extended axially to a greater or lesser extent by the action of the ram (23) from the inside against the leaf (11b) facing away from the opening (12), **in that** a device (24') is connected in a rotationally fixed manner to the airbag-retaining disc (24), which device is also secured in a rotationally fixed manner with respect to the ram (23) engaging in the airbag-retaining disc (24), and **in that** a second ram (25), coaxial to the first ram (23), is arranged outside the airbag (11) axially with respect to the first ram (23), in which case the two rams (23, 25) can clamp between them the leaf (11b) which faces away from the opening (12), of the airbag (11) which is extended to a greater or lesser extent, in order to make possible the different folding processes.

11. Device according to Claim 10, **characterized in that** for the twisting and compression of the folded airbag (11) a second ram (25') having a flange (25'') is provided which covers the entire end side of the folded airbag (11) from the outside.

12. Device according to Claim 10 or 11, **characterized in that** means (28) are provided for grasping the airbag (11) on the outer circumference (22).

13. Device according to Claim 12, **characterized in that** in addition two annular rams (26, 27) which can be pressed axially from opposite sides onto the airbag (11) are provided, the radius of which annular rams is smaller than that of the outer circumference (22) of the flat airbag (11).

14. Airbag device having an airbag (11) which is folded to form a package (13) and is arranged in a container (14), in particular produced by means of the method according to one of Patent Claims 1 to 9 and/or having a device according to one of Patent Claims 10 to 13, **characterized in that** regions of the package (13) which are spaced apart axially and/or radially are rotated in the same direction or in an opposed direction relative to one another.

15. Device according to Claim 14, **characterized in that** the end sides (29, 30) of the package (13) are rotated with respect to each other about the axis (15) of the preferably central opening (12).

16. Device according to Claim 14 or 15, **characterized in that** the outer circumference (22) of the airbag (11) and the leaf material (11') in the region of the opening (12) are rotated with respect to each other about the axis (15) of the opening (12).

## Revendications

1. Procédé pour loger un sac gonflable (11) d'un dispositif d'air-bag dans des véhicules automobiles, dans un récipient (14) pouvant être rempli, procédé selon lequel le sac gonflable (11), qui est formé par deux feuilles flexibles (11a, 11b) de préférence de forme circulaire, qui sont appliquées l'une sur l'autre et sont reliées entre elles au niveau de leur périphérie et dont l'une comporte une ouverture de préférence centrale (12) pour loger un générateur de gaz, est replié sous la forme d'un paquet compact (13) et est disposé sous cette forme dans le récipient (14), **caractérisé en ce**
**qu'**on applique un mouvement de rotation relative, autour de l'axe (15) de l'ouverture (12), à différentes parties, qui sont distantes axialement et/ou radialement les unes des autres, du sac gonflable (11) plus ou moins déployé axialement.

2. Procédé selon la revendication 1, **caractérisé en ce qu'**avant le pliage, on renforce le matériau autour de l'ouverture (12) à l'aide d'un disque (24) de retenue du sac gonflable, qui est utilisé de préférence ultérieurement également en tant que bride de liaison pour établir une liaison avec le générateur de gaz.

3. Procédé selon la revendication 1 ou 2, **caractérisé en ce**
**que** l'on déploie axialement, de préférence légèrement, axialement le sac gonflable plat (11) et qu'on le rabat à partir de l'ouverture (12), dans la direction de l'axe (15) de l'ouverture (12), autour du matériau en forme de feuille (11') dans la zone de l'ouverture centrale (12) en formant plusieurs, de préférence deux à huit et notamment trois à six et, de façon appropriée, par exemple quatre plis radiaux (16), que l'on peut replier de préférence de façon multiple, notamment deux fois dans une direction et/ou dans l'autre direction, et qu'on applique une torsion autour de l'axe (15) à la partie (11"), située axialement à l'opposé de l'ouverture (12), par rapport au matériau en forme de feuille (11') dans la zone de l'ouverture (12) et qu'on l'amène axialement sur le matériau en forme de feuille (11') dans la zone de l'ouverture (12), ou qu'on applique une torsion, autour de l'axe (15), à une partie (32) entre les faces frontales (29, 30) du sac gonflable repliable (11) par rapport aux faces frontales (29, 30) et qu'on place les faces frontales (29, 30) l'une sur l'autre.

4. Procédé selon la revendication 1 ou 2, **caractérisé en ce**
**qu'**on déploie le sac gonflable plat (11) dans la direction de l'axe (15) de l'ouverture centrale (12) suffisamment pour qu'un pliage parapluie soit possible, qu'on exécute un pliage parapluie (11"') de préférence simple ou multiple, qu'ensuite on forme plusieurs, de préférence deux à huit, notamment trois à six et de façon appropriée quatre plis radiaux (16), que l'on peut replier de préférence de façon multiple, notamment deux fois, dans une direction périphérique ou dans l'autre, et qu'on applique une torsion autour de l'axe (15) à la partie (11"), tournée à l'opposé de l'ouverture (12), par rapport au matériau en forme de feuille (11') dans la zone de l'ouverture centrale (12) et qu'on amène axialement cette partie sur le matériau en forme de feuille (11) dans la zone de l'ouverture (12) ou qu'on applique une torsion, autour de l'axe (15), à une partie (31) entre les faces frontales (29, 30) du sac pneumatique replié (11) par rapport aux faces frontales (29, 30) et qu'on applique les faces frontales (29, 30) l'une sur l'autre.

5. Procédé selon la revendication 3 ou 4, **caractérisé en ce qu'**on exécute les mouvements de rotation et les déplacements axiaux simultanément dans le sens d'un mouvement de vissage.

6. Procédé selon l'une des revendications 2 à 4,caractéirs en qu'on dispose autour du sac pneumatique replié (11), avant la rotation et la compression axiale, un moule creux (17), qui correspond à la périphérie du paquet terminé (13) et dans lequel on introduit axialement, en appliquant une torsion et une compression le sac gonflable replié (11).

7. Procédé selon la revendication 6, **caractérisé en qu'**une fois le paquet (13) terminé, on repousse le boîtier (14), ouvert d'un côté, sur le moule creux (17) et on retire ce dernier axialement dans la direction opposée.

8. Procédé selon la revendication 1 ou 2, **caractérisé en ce qu'**on applique une torsion au sac gonflable plat, tout en réduisant le diamètre, en le saisissant sur sa périphérie et en exécutant une rotation autour de l'axe (15) de l'ouverture centrale (12) par rapport au matériau du récipient (11') dans la zone de l'ouverture (12) et on le replie de ce fait sous forme hélicoïdale, et qu'on donne la forme finale au paquet (13) au moyen de plaques de moule (18) qui peuvent être repoussées vers l'intérieur à partir de la périphérie de l'axe (15).

9. Procédé selon la revendication 8, **caractérisé en ce qu'**on saisit le sac gonflable plat (11) en supplément dans sa partie périphérique (21) ayant un rayon inférieur à la périphérie extérieure (22) et on lui applique une torsion, au niveau de la périphérie extérieure (22), dans la zone de l'ouverture (12), en sens opposé du matériau en forme de feuille (11').

10. Dispositif pour loger un sac gonflable (11) d'un dispositif d'air-bag dans des véhicules automobiles, un récipient (14) pouvant être rempli, procédé selon lequel le sac gonflable (11), qui est formé par deux feuilles flexibles (11a, 11b) de préférence de forme circulaire, qui sont appliquées l'une sur l'autre et sont reliées entre elles au niveau de leur périphérie et dont l'une comporte une ouverture de préférence centrale (12) pour loger un générateur de gaz, est replié sous la forme d'un paquet compact (13) et est disposé sous cette forme dans le récipient (14), notamment pour la mise en oeuvre du procédé selon les revendications 1 à 9, **caractérisé en ce**
**qu'**il est prévu un premier poussoir (23), qui s'engage axialement dans l'ouverture (12) qui est renforcée de préférence par un disque (24) de retenue du sac gonflable et de préférence central, et qu'on le repousse axialement par rapport à l'ouverture (12) de telle sorte que, sous l'effet de la saisie effectuée de l'intérieur, de la feuille (11b), située à l'opposé de l'ouverture (12), derrière le poinçon (23) le sac gonflable (11) tout d'abord plat peut être plus ou moins déployé axialement, qu'au disque (24) de retenue du sac gonflable est relié, avec blocage en rotation, un dispositif (24') qui est également fixé, avec blocage en rotation, par rapport au poinçon (23), qui s'engage dans le disque (24) de retenue du sac gonflable, et qu'un second poinçon (25) coaxial au premier point (23) est disposé axialement par rapport au premier poinçon (23) à l'extérieur du sac gonflable (11), les poinçons (23, 25) pouvant serrer entre eux la feuille (11) située à l'opposé de l'ouverture (12), du sac gonflable (11) plus ou moins déployé, pour permettre les différents processus de pliage.

11. Dispositif selon la revendication 10, **caractérisé en ce que** pour la torsion et la compression du sec gonflable replié (11), il est prévu un second poussoir (25') possédant une bride (25"), qui recouvre la face frontale complète du sac gonflable replié (11).

12. Dispositif selon la revendication 10 ou 11, **caractérisé en ce que** les moyens (28) servant à détecter le sac gonflable (11) sont prévus sur la périphérie extérieure (22).

13. Dispositif selon la revendication 12, **caractérisé en ce qu'**en outre il est prévu deux poussoirs annulaires (26, 27), pouvant être serrés axialement contre le sac gonflable (11) sur des côtés opposés, et dont le rayon est inférieur à celui de la périphérie extérieure (22) du sac gonflable plat (11).

14. Dispositif d'air-bag comportant un sac gonflable (11) replié sous la forme d'un paquet (13) et disposé dans un récipient (14), et fabriqué notamment au moyen du procédé selon l'une des revendications 1 à 9 et/ou comportant un dispositif selon l'une des revendications 10 à 13,
**caractérisé en ce que** des parties, qui sont distantes axialement et/ou radialement, du paquet (13) sont scindées dans le même sens ou en des sens réciproquement opposés.

15. Dispositif selon la revendication 14, **caractérisé en ce que** les faces frontales (29, 30) du paquet (13) sont torsadées en des sens opposés autour de l'axe (15) de l'ouverture de préférence centrale (12).

16. Dispositif selon la revendication 14 ou 15, **caractérisé en ce que** la périphérie extérieure (22) du sac gonflable (11) et le matériau en forme de feuille (11') sont torsadés en des sens opposés, dans la zone de l'ouverture (12) autour de l'axe (15) de l'ouverture (12).
